# EUROPEAN PATENT SPECIFICATION

(11) **EP 3 282 138 B1**
(45) Date of publication and mention of the grant of the patent: **17.06.2020**
(21) Application number: 17185243.7
(22) Date of filing: 08.08.2017
(51) Int. Cl.: F16B 37/14, B60B 3/16, F16B 19/02

(54) **FASTENING ELEMENT INTENDED FOR VEHICLE WHEELS**
BEFESTIGUNGSELEMENT FÜR FAHRZEUGRÄDER
ÉLÉMENT DE FIXATION POUR DES ROUES DE VÉHICULE

(30) Priority: 11.08.2016 IT 201600084788
(43) Date of publication of application: 14.02.2018
(73) Proprietor: Groppo, Lazzaro, 12040 Sanfre' (CN) (IT); Groppo, Matteo, 12040 Sanfre (CN) (IT)
(72) Inventor: Groppo, Lazzaro, 12040 Sanfre' (CN) (IT); Groppo, Matteo, 12040 Sanfre (CN) (IT)
(74) Representative: Robba, Pierpaolo

(56) References cited:
- EP-A1- 1 426 637
- EP-A1- 2 228 176
- GB-A- 2 362 695
- JP-U- 3 195 626
- KR-U- 20110 007 440
- US-A- 5 772 377
- US-A1- 2004 096 289

## Description

### Technical Field

The invention relates to a fastening element intended for vehicle wheels. The fastening element according to the invention can be made as a nut or a bolt.

### Prior Art

Fastening elements intended for vehicle wheels and made as nuts or bolts are known in the art. Such fastening elements generally have a cylindrical body provided with either a threaded longitudinal hole, when they are made as nuts, or a threaded longitudinal shaft, when they are made as bolts. The hole may be a through hole or a blind hole, depending on the applications.

Always in accordance with the prior art, the cylindrical body is further provided with an engaging portion or head for a tool or an actuating spanner, allowing rotating the fastening element about its longitudinal axis. The engaging portion generally has a hexagonal cross-section and thus it can be engaged by a standard fixed spanner with hexagonal cross-section. The spanner can be possibly applied to a screwing device, e.g. of pneumatic type. When the fastening element is in use, i.e. it is engaged into a threaded stud or a threaded seat depending on whether the element is a nut or a bolt, respectively, the engaging portion generally remains visible from the outside, since it must be accessible to the actuating spanner. For instance, when the nut or bolt is engaged in a hub of a vehicle wheel, the engaging portion remains visible outside the wheel rim.

In some applications, for instance in the automotive field, the need exists to make the engaging portion of the fastening element aesthetically pleasant. This result may be achieved by treatments of different kinds applied either to the whole body of the fastening element, or only to the portion remaining visible from the outside. For instance, the engaging portion of the element, when made of steel, may undergo a chromium-plating treatment. In the alternative, the engaging portion may be painted. In a further alternative, the engaging portion may be covered with a metallic or plastic material. In the latter case, the covering may either be adherent to the external surface of the engaging portion, or consist of a hollow cap press-fitted onto the engaging portion. In some cases, it is also known to apply, between the cap and the engaging portion, a hardening adhesive significantly improving the mutual fastening of both components. The fastening of the cap onto the engaging portion must actually be such that, when a rotation torque is applied to the fastening element by means of the actuating spanner, it prevents the cap from being detached from the body of the engaging portion because of the applied torque. JPS5010968 and GB 2378740 disclose fastening elements equipped with a cap of the kind disclosed. According to the prior art, the cap may be made of different materials, such as for instance aluminium or chromium-plated steel.

The prior art fastening elements intended for vehicle wheels may further include a ferrule rotatably associated with the cylindrical body of the fastening element. Generally, the ferrule is idly rotatable about the longitudinal axis of the body of the fastening element.

One of the problems to be solved in designing a fastening element equipped with a rotatable ferrule is how to prevent the ferrule from being detached from the body of the fastening element, while however preserving its capability of idly rotating about the body.

According to the prior art, the ferrule is held firmly associated with the fastening element thanks to the cap.

Examples of fastening elements equipped with a rotatable ferrule of the above kind are disclosed in US 5,772,377 and US 6,592,314.

The solution providing for keeping the ferrule associated with the body thanks to the cap has however a number of drawbacks. A first drawback is the fragility of the assembly because of the limited thickness of the cap wall. Thus, the cap can be easily deformed while the fastening element is being used, especially when the element is tightly screwed, and consequently the ferrule can detach itself from the body. Another drawback results from the manufacturing complexity, since the cap is to be bent at its base in order to retain the ferrule, and such an operation is to be carefully and precisely carried out in order to preserve the capability of idle rotation of the ferrule about the body of the fastening element. Moreover, such an operation unavoidably results in the creation of axial clearances between the ferrule and the body of the fastening element, which clearances are hard to eliminate.

It is a first object of the invention to provide a fastening element, equipped with a cap and a rotatable ferrule, which is free from the drawbacks of the prior art. It is another object of the invention to provide an element of the above kind, which can be made as a nut or a bolt. It is a further object of the invention to provide a fastening element that is aesthetically pleasant and that preserves its aesthetical features even after a heavy use. It is a further, but not the last object of the invention to provide a nut or a bolt that can be industrially manufactured at favourable costs.

The above and other objects are achieved by means of the fastening element as claimed in the appended claims.

### Description of the invention

The fastening element intended for vehicle wheels according to the invention includes a cylindrical body. A longitudinal axis, an engaging portion for a tool by which the fastening element is rotated about said axis, and a threaded surface axially extending about said longitudinal axis are defined in the body of the fastening element. In an embodiment, an annular flange radially extending about said cylindrical body is moreover preferably defined in the body of the fastening element.

The fastening element further includes a cap and a ferrule. The cap covers a first end of said cylindrical body. The ferrule is idly rotatable relative to said cylindrical body and is associated with a second end of said cylindrical body.

According to the invention, the body of the fastening element and the rotatable ferrule are provided with engaging means mutually cooperating for keeping the ferrule firmly associated with said body. Advantageously, therefore, according to the invention, the ferrule is kept firmly associated with the body of the fastening element even in the absence of the cap, which does not serve the purpose of keeping the ferrule associated with the body

Depending on the embodiments, the cap is held onto the body of the fastening element by means of an edge of the cap bent about the body, or is held onto the fastening element by means of an edge of the cap bent about the rotatable ferrule, which is in accordance with the invention.

The fastening element according to the invention can be made as a threaded nut or bolt. When made as a nut, the element has a cylindrical body provided with a threaded longitudinal hole. The hole may be a through hole or a blind hole. When made as a bolt, the element has a cylindrical body provided with a threaded longitudinal shaft. The fastening element according to the invention includes a cylindrical portion coaxially extending relative to the threaded hole or the threaded shaft. The cylindrical portion acts as an engaging portion for a spanner driving the rotation of the fastening element. The spanner allows rotating the fastening element and locking it by means of a predetermined locking torque, by making the element engage either into a threaded shaft, for instance a stud of a hub of a vehicle wheel, or into a threaded hole, for instance provided in a hub of a vehicle wheel. The cylindrical portion acting as an engaging portion has a polygonal, preferably hexagonal, cross-section. The cap is applied as a covering around the cylindrical portion.

In accordance with the invention, the cap is fastened to the body of the fastening element by caulking the bottom edge of the cap about the annular flange or about the ferrule. The cap can also be made integral with the cylindrical portion by press-fitting and/or by gluing. Advantageously, according to the invention, the cap has an inner cross-section complementary to the outer cross-section of the cylindrical portion.

The fastening element can be made of any suitable material, but preferably it will be made of steel. More particularly, the cap will preferably be made of stainless steel.

### Brief Description of the Figures

Some preferred embodiments will be described by way of nonlimiting examples with reference to the accompanying drawings. Only figures 3A-4C show embodiments of the invention.
- Fig. 1 is a longitudinal sectional view of the fastening element in a first embodiment not in accordance with the invention;
- Fig. 2A is a longitudinal sectional view of the fastening element in a second embodiment not in accordance with the invention in an intermediate manufacturing step, before the cap is assembled;
- Fig. 2B is an enlarged view of a detail of Fig. 2A;
- Fig. 3A is a perspective view in longitudinal section of the fastening element shown in Fig. 2 in a further manufacturing step, with the cap assembled;
- Fig. 3B is an enlarged view of a detail of Fig. 3A;
- Figs. 4A to 4C are top views of as many variant embodiments of the invention in the intermediate manufacturing step, before the cap is assembled;
- Fig. 5A is a longitudinal sectional view of the fastening element in a third embodiment not in accordance with the invention;
- Fig. 5B is an enlarged view of a detail of Fig. 5A.

In all Figures, the same reference numerals have been used to denote equal or functionally equivalent components.

### Detailed description of some preferred embodiments

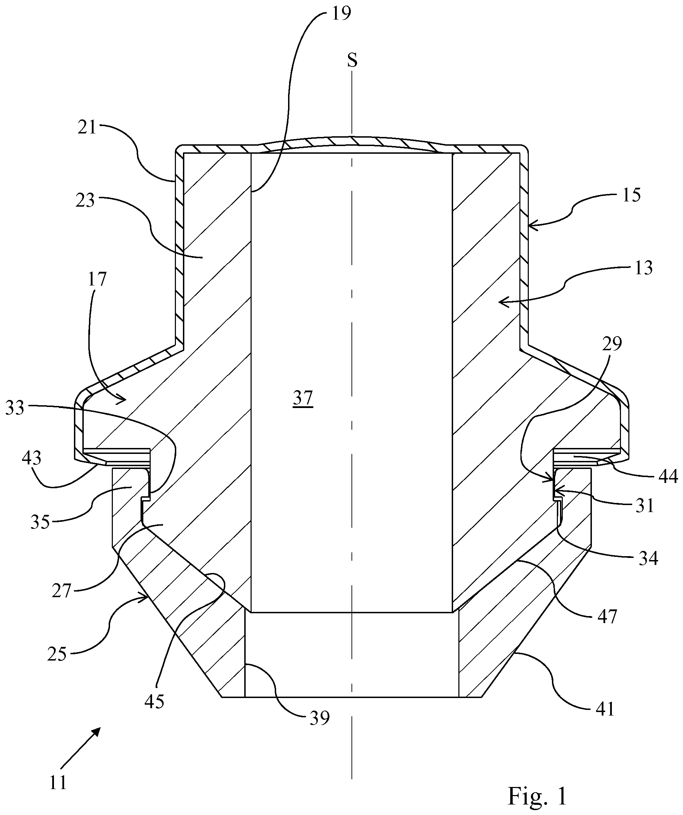

Referring to Fig. 1, there is shown a first embodiment of fastening element 11. Element 11 includes a cylindrical body 13. A longitudinal axis "S", an engaging portion 15, an annular flange 17 radially extending about said cylindrical body 13 and a threaded surface 19 axially extending about said longitudinal axis "S" are defined in body 13.

Engaging portion 15 is intended for engaging a tool (not shown) by which fastening element 11 is rotated about said axis "S" when element 11 is to be screwed of unscrewed.

Element 11 further includes a cap 21 covering a first end 23 of said cylindrical body 13.

Element 11 further includes a ferrule 25 idly rotatable relative to said cylindrical body 13. Ferrule 25 is associated with a second end 27 of said cylindrical body 13.

Body 13 of fastening element 11 and ferrule 25 are provided with engaging means 29, 31 mutually cooperating in order to keep ferrule 25 firmly associated with said body 13.

In the embodiment shown, said engaging means 29, 31 comprise an outer annular seat 33, provided in said body 13, and an annular edge 35 radially protruding into ferrule 25. In this embodiment, annular edge 35 has a substantially rectangular cross-section. Seat 33 defines an abutment edge 34 preventing ferrule 25 from being slipped off body 13.

Always referring to the embodiment shown, element 11 is made as a nut provided with a threaded hole 37. Yet, said element 11 could be made as a bolt, by providing a threaded shaft axially extending from body 13 on the side opposite to the first end 23. In case of both a nut and a bolt, ferrule 25 has an axial hole 39 allowing either the passage of a stud engaging into the nut or the passage of the bolt shaft. In the embodiment shown, ferrule 25 further includes a conical abutment surface 41, arranged to come into contact with a corresponding conical seat provided in the rim of a vehicle wheel. Other shapes are possible for abutment surface 41 of ferrule 25.

Cap 21 is fastened to body 13 by caulking or by bending base edge 43 about flange 17. An adhesive can be provided between cap 21 and body 13. Cap 21 can also be press-fitted onto body 13 and be held because of the interference being established between the inner surface of cap 21 and the outer surface of body 13.

A free space 44 is preferably provided between flange 17 and ferrule 25. Notwithstanding said space 44, substantially no axial clearance exists between body 13 and ferrule 25 thanks to the abutment between outer conical surface 45 of body 13 and inner conical surface 47 of ferrule 25.

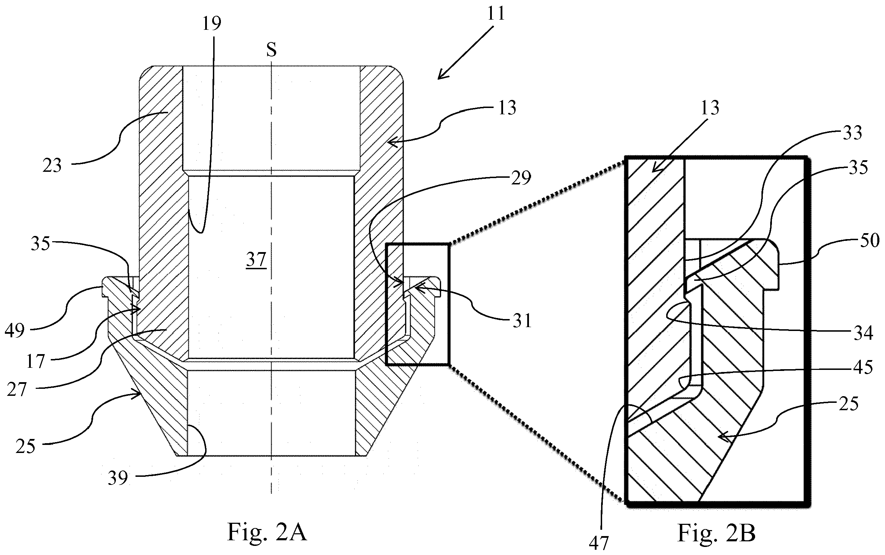

Referring to Figs. 2A and 2B, a second embodiment of element 11 is shown, in an intermediate manufacturing step before cap 21 is assembled.

The step illustrated corresponds to the configuration obtained after body 13 has been introduced into ferrule 25. The cooperation between engaging means 29, 31 prevents the ferrule 25 from being detached from body 13. In this embodiment, annular edge 35 has a substantially trapezoidal cross-section. Moreover, in this embodiment, body 13 lacks the annular flange and consequently edge 43 of cap 21 is bent about an outer circumferential edge 49 of ferrule 25.

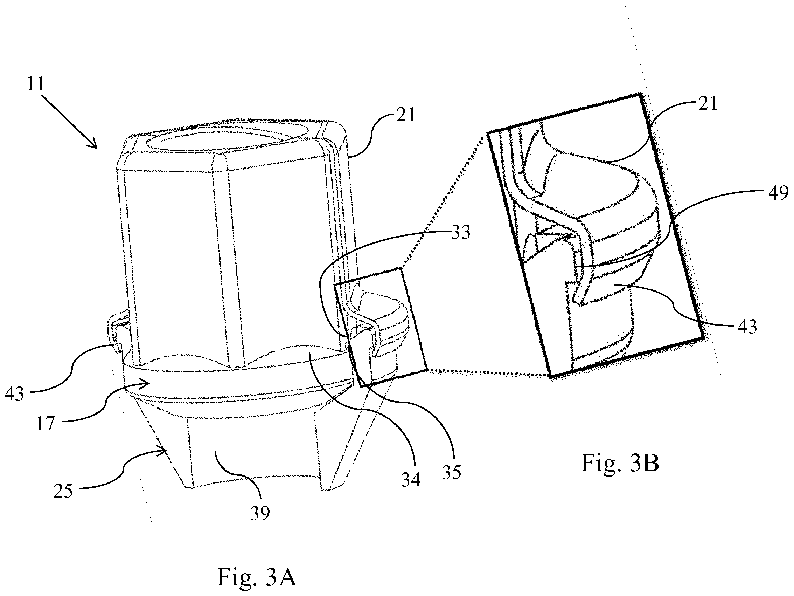

Referring to Figs. 3A and 3B, fastening element 11 of Fig. 2 is shown in a further manufacturing step after cap 21 has been assembled. In this embodiment, cap 21 is fastened to body 13 by caulking or by bending base edge 43 about a flange 50 provided externally of ferrule 25. An adhesive can be provided between cap 21 and body 13. Cap 21 can also be press-fitted onto body 13 and be retained because of the interference being established between the inner surface of cap 21 and the outer surface of body 13. According to this embodiment, ferrule 25 is held within fastening element 11 thanks to the cooperation between engaging means 29, 31, and cap 21 does not contribute to such a function.

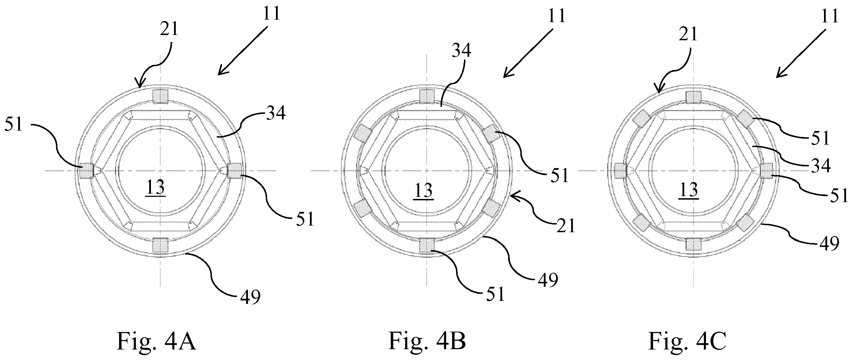

Referring to Figs. 4A to 4C, there are shown an equal number of variant embodiments of engaging means 31 provided on ferrule 25. Said engaging means include four or six or eight teeth 51, depending on the embodiment.

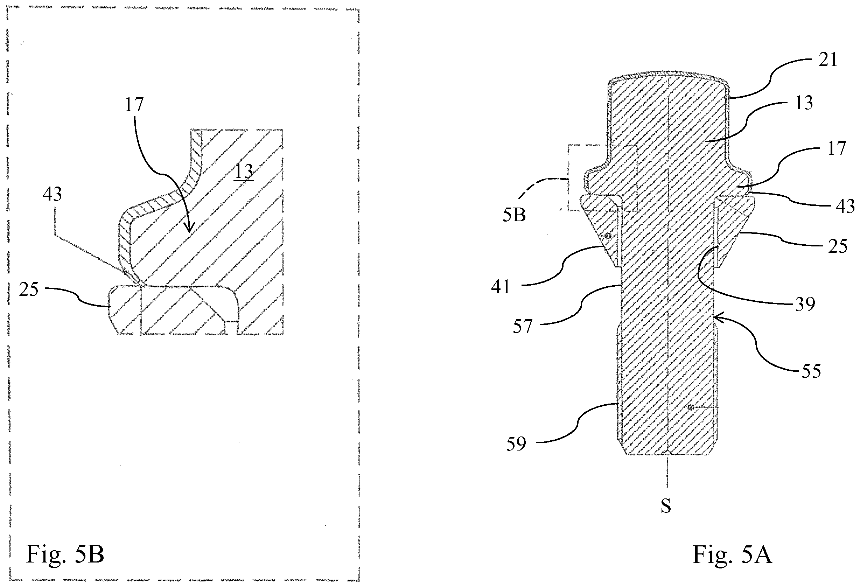

Referring to Figs. 5A and 5B, a third embodiment is shown, in which fastening element 11 is made as a bolt having a threaded shaft 55. The threaded shaft defines a smooth, unthreaded portion 57 and a threaded end portion 59. Portion 59 allows screwing the bolt into a threaded hole as long as ferrule 25 arrives into abutment, by means of its conical surface, against the corresponding surface of a wheel rim. Ferrule 25 is freely rotatable relative to body 13 and shaft 55, and it is kept associated with element 11 by virtue of the fact that hole 39 has a smaller diameter than the outer diameter of threaded portion 59. This diameter reduction is obtained by radially compressing ferrule 25 after shaft 55 has been introduced into hole 39 and the ferrule has reached smooth portion 57.

The fastening element as described and shown can undergo several variations and modifications, lying within the scope of the claims.

## Claims

1. Fastening element (11) intended for vehicle wheels and made as a nut or bolt, comprising:
- a cylindrical body (13), in which there are defined a first end (23), a second end (27), a longitudinal axis ("S"), an engaging portion (15) for a tool and a threaded surface (19) axially extending about said longitudinal axis ("S");
- a cap (21) covering the first end (23) of the cylindrical body (13);
- a ferrule (25) associated with the cylindrical body (13) in an idly rotatable manner; wherein said cylindrical body (13) and said ferrule (25) are provided with engaging means (29, 31; 39, 59) mutually cooperating for holding the ferrule firmly associated with said cylindrical body (13), whereby the ferrule (25) is held firmly associated with the body of the fastening element in the absence of the cap (21), **characterized in that** said cap (21) is fastened to the cylindrical body (13) by caulking or by bending a base edge (43) about an outer circumferential edge (49) of the ferrule (25).

2. Fastening element according to claim 1, wherein said engaging means (29, 31; 39, 59) comprise an outer annular seat (33) provided in said cylindrical body (13), and an annular edge (35) radially protruding into the ferrule (25).

3. Fastening element according to claim 2, wherein said annular seat (33) defines an abutment edge (34) for the annular edge (35) of the ferrule, preventing the ferrule (25) from being slipped off the cylindrical body (13).

4. Fastening element according to claim 1 or 2 or 3, wherein the cylindrical body (13) comprises an annular flange (17) radially extending about said cylindrical body (13).

5. Fastening element according to any of the preceding claims, wherein the ferrule (25) comprises an axial hole (39).

6. Fastening element according to any of the preceding claims, wherein the ferrule (25) comprises an inner abutment surface (47) arranged to come into contact with the cylindrical body (13), and a conical abutment surface (41) arranged to come into contact with a corresponding conical seat provided in the rim of a vehicle wheel.

7. Fastening element according to any of the preceding claims, wherein the cap (21) is made integral to the cylindrical body (13) and has an inner cross-section complementary to the outer cross-section of the cylindrical body (13).

## Patentansprüche

1. Befestigungselement (11) vorgesehen für Fahrzeugräder und hergestellt als eine Mutter oder ein Bolzen, mit:
- einem zylindrischen Körper (13), in dem ein erstes Ende (23), ein zweites Ende (27), eine Längsachse ("S"), ein Kopplungsabschnitt (15) für ein Werkzeug und eine Gewindefläche (19), die sich axial um die Längsachse ("S") erstreckt, ausgebildet sind,
- einer Kappe (21), die das erste Ende (23) des zylindrischen Körpers (13) bedeckt,
- einer Hülse (25), die dem zylindrischen Körper (13) in einer frei drehbaren Weise zugeordnet ist,
wobei der zylindrische Körper (13) und die Hülse (25) mit Kopplungsmitteln (29, 31; 39, 59) versehen sind, die miteinander zusammenwirken, um die Hülse dauerhaft dem zylindrischen Körper (13) zugeordnet zu halten, wodurch die Hülse (25) dauerhaft dem Körper des Befestigungselement bei Abwesenheit der Kappe (21) zugeordnet gehalten ist, **dadurch gekennzeichnet, dass** die Kappe (21) an dem zylindrischen Körper (13) durch Verstemmen oder durch Biegen einer Basiskante (43) um eine äußere Umfangskante (49) der Hülse (25) befestigt ist.

2. Befestigungselement nach Anspruch 1, wobei die Kopplungsmittel (29, 31; 39, 59) einen äußeren ringförmigen Sitz (33), der in dem zylindrischen Körper (13) ausgebildet ist, und eine ringförmige Kante (35), die radial in die Hülse (25) vorsteht, aufweisen.

3. Befestigungselement nach Anspruch 2, wobei der ringförmige Sitz (33) eine Anstoßkante (34) für die ringförmige Kante (35) der Hülse bildet, welche die Hülse (25) daran hindert, von dem zylindrischen Körper (13) abzurutschen.

4. Befestigungselement nach Anspruch 1 oder 2 oder 3, wobei der zylindrische Körper einen ringförmigen Flansch (17) aufweist, der sich radial um den zylindrischen Körper (13) erstreckt.

5. Befestigungselement nach einem der vorstehenden Ansprüche, wobei die Hülse (25) ein axiales Loch (39) aufweist.

6. Befestigungselement nach einem der vorstehenden Ansprüche, wobei die Hülse (25) eine innere Anschlagfläche (47), die dafür ausgelegt ist, mit dem zylindrischen Körper (13) in Kontakt zu kommen, und eine konische Anschlagfläche (41) aufweist, die dafür ausgelegt ist, mit einem entsprechenden konischen Sitz in Kontakt zu kommen, der in der Felge eines Fahrzeugrades vorgesehen ist.

7. Befestigungselement nach einem der vorstehenden Ansprüche, wobei die Kappe (21) integral mit dem zylindrischen Körper (13) ausgebildet ist und einen inneren Querschnitt hat, der dem äußeren Querschnitt des zylindrischen Körpers (13) entspricht.

## Revendications

1. Elément de fixation (11) destiné à des roues de véhicule et constitué sous la forme d'un écrou ou d'un boulon, comprenant :
- un corps cylindrique (13), dans lequel sont définis une première extrémité (23), une seconde extrémité (27), un axe longitudinal (« S »), une portion d'engagement (15) pour un outil et une surface filetée (19) s'étendant axialement autour dudit axe longitudinal (« S ») ;
- un capuchon (21) couvrant la première extrémité (23) du corps cylindrique (13) ;
- une virole (25) associée au corps cylindrique (13) de manière rotative au ralenti ;
dans lequel ledit corps cylindrique (13) et ladite virole (25) sont munis de moyens d'engagement (29, 31 ; 39, 59) coopérant mutuellement pour maintenir la virole fermement associée audit corps cylindrique (13), moyennant quoi la virole (25) est maintenue fermement associée au corps de l'élément de fixation en l'absence du capuchon (21), **caractérisé en ce que** ledit capuchon (21) est fixé au corps cylindrique (13) par calfeutrage ou par flexion d'un bord de base (43) autour d'un bord circonférentiel externe (49) de la virole (25).

2. Elément de fixation selon la revendication 1, dans lequel lesdits moyens d'engagement (29, 31; 39, 59) comprennent un siège annulaire externe (33) prévu dans ledit corps cylindrique (13), et un bord annulaire (35) radialement saillant dans la virole (25).

3. Elément de fixation selon la revendication 2, dans lequel ledit siège annulaire (33) définit un bord de butée (34) pour le bord annulaire (35) de la virole, empêchant la virole (25) d'être sortie par glissement du corps cylindrique (13).

4. Elément de fixation selon la revendication 1 ou 2 ou 3, dans lequel le corps cylindrique (13) comprend une bride annulaire (17) s'étendant radialement autour dudit corps cylindrique (13).

5. Elément de fixation selon l'une quelconque des revendications précédentes, dans lequel la virole (25) comprend un trou axial (39).

6. Elément de fixation selon l'une quelconque des revendications précédentes, dans lequel la virole (25) comprend une surface de butée interne (47) agencée pour entrer en contact avec le corps cylindrique (13), et une surface de butée conique (41) agencée pour entrer en contact avec un siège conique correspondant prévu dans la jante d'une roue de véhicule.

7. Elément de fixation selon l'une quelconque des revendications précédentes, dans lequel le capuchon (21) est constitué solidairement du corps cylindrique (13) et présente une section transversale interne complémentaire de la section transversale externe du corps cylindrique (13).
